# FASCICULE DE BREVET EUROPEEN

(11) **EP 2 649 277 B1**
(45) Date de publication et mention de la délivrance du brevet: **25.01.2017**
(21) Numéro de dépôt: 11752242.5
(22) Date de dépôt: 07.09.2011
(51) Int. Cl.: F01C 21/10, F04C 18/16, F04C 25/02, B65B 31/02, F04B 17/00

(54) **POMPE À VIDE POUR APPLICATIONS DANS DES MACHINES D'EMBALLAGE SOUS VIDE**
VAKUUMPUMPE FÜR ANWENDUNGEN BEI VAKUUMVERPACKUNGSMASCHINEN
VACUUM PUMP FOR APPLICATIONS IN VACUUM PACKAGING MACHINES

(30) Priorité: 10.12.2010 CH 20672010
(43) Date de publication de la demande: 16.10.2013
(73) Titulaire: Ateliers Busch S.A., 2906 Chevenez (CH)
(72) Inventeur: MÜLLER, Didier, CH-2800 Delémont (CH); ILTCHEV, Théodore, F-90600 Grandvillars (FR); VARRIN, Stéphane, CH-2932 Coeuve (CH); SCHWOB, Philippe, F-68480 Roppentzwiller (FR)
(74) Mandataire: Scheuzger, Beat Otto
(86) Numéro de dépôt international: PCT/EP2011/065443
(87) Numéro de publication internationale: WO 2012/076204

(56) Documents cités:
- EP-A1- 1 681 469
- DE-A1- 19 749 572
- DE-A1-102008 063 133
- US-A- 5 904 473
- US-A1- 2006 127 245

## Description

### Domaine d'application

La présente invention se rapporte au domaine technique des machines d'emballage sous vide (par ex. « chamber machine », « thermoformer » ou « tray sealer »). En particulier, la présente invention se rapporte aux pompes à vide utilisées dans ces machines.

### Etat de la technique

Les machines d'emballage sous vide sont aujourd'hui utilisées dans plusieurs domaines industriels. De ce fait, l'oxygène contenu dans l'air a des effets néfastes sur la qualité et la conservation des produits. C'est donc la raison de réaliser certains processus industriels, p.ex. l'emballage des produits, sous vide partiel ou total. L'emballage des produits sous vide réduit ainsi significativement la possibilité de leur détérioration sous l'influence de l'air.

En particulier, les industries qui font souvent recours à l'emballage sous vide sont l'industrie alimentaire, l'industrie cosmétique et l'industrie pharmaceutique parce que ces industries sont obligées à garantir en tout temps que leurs produits arriveront au consommateur en parfait état.

Par conséquent, les machines d'emballage sous vide doivent nécessairement comporter une source de vide. Cette source de vide (qui est typiquement une pompe à vide) évacue l'air contenu dans l'emballage avant de le renfermer. Dans un type d'application, une atmosphère modifiée est injectée dans l'emballage avant de la renfermer. Cette méthode est très souvent utilisée dans l'industrie alimentaire (en particulier pour l'emballage de la viande fraiche) parce qu'elle permet à la fois de conserver la forme originale des aliments et, même après une très longue conservation, leur aspect fraicheur apprécié par les clients.

Plusieurs types de machines qui permettent de réaliser les emballages sous vide sont aujourd'hui habituellement utilisés. Ces différents types de machines se distinguent notamment par le type d'emballage produit, la structure ou application souhaitée.

Un type de machines d'emballage sous vide qui est actuellement répandu, notamment dans l'industrie alimentaire, est connu sous le nom de « tray sealer » ou « operculeuse ».

Une operculeuse est typiquement intégrée dans un ensemble pour l'emballage des produits alimentaires dans des barquettes en une matière plastique ou dans d'autres récipients appropriés. Dans un tel ensemble, un « train de barquettes » avance pas-à-pas sur une bande ou un autre dispositif similaire dans un poste de remplissage dans lequel on dépose dans chaque barquette une dose prédéterminée du produit. Par la suite, la bande avec les barquettes continue son chemin vers l'operculeuse dans laquelle les barquettes sont recouvertes hermétiquement d'un film protecteur avant d'être stockées pour le transport et la vente.

Selon les applications, les barquettes peuvent être mises sous vide et/ou remplies d'un mélange de gaz (connu sous nom d' « atmosphère modifiée » ou MAP) avant d'être operculées.

Les « thermoformeuses » (ou « thermoformer ») sont un autre type de machines d'emballage sous vide. Vu que les thermoformeuses sont assez souvent utilisées dans l'emballage des médicaments (comprimés, pilules, pastilles, etc.) sous forme de blisters, on les appelle également « machines d'emballage sous blister ».

Une thermoformeuse est essentiellement une machine qui permet de réaliser des pièces par déformation d'une plaque de plastique. A cette fin, une résistance électrique est typiquement prévue pour chauffer une plaque de plastique jusqu'à la rendre molle. Ensuite, un moule est utilisé pour donner la forme souhaitée à la plaque avant de la refroidir et extraire de la machine.

Finalement, les machines appelées « chamber machines » ou « machines à cloche » travaillent à base de sachets en un matériau plastique. Elles sont très répandues dans l'industrie alimentaire, mais trouvent aussi leur application dans l'emballage des autres produits de grande consommation, des instruments chirurgicaux ou similaires. Dans une première étape, les sachets sont remplis du produit à emballer. Par la suite, les sachets sont positionnés dans la chambre de travail qui est fermée par une cloche, avant de réaliser le vide dans le sachet par l'évacuation de la chambre de travail. Dans certaines applications, une atmosphère contrôlée est crée dans le sachet. Finalement, chaque sachet est renfermé par soudage thermique.

Bien entendu, il existe également d'autres types de machines d'emballage sous vide qui se distinguent de ces trois types esquissés en particulier par le type d'emballage utilisé.

Revenant aux différentes sources de vide dans ces machines, on connaît de longue date des installations centrales de vide, notamment pour des batteries de machines d'emballage sous vide. De telles installations centrales de vide font nécessairement appel à un réseau de conduits qui transporte l'air entre l'emballage et la source centrale. Assez souvent, ces installations centrales de vide comprennent une multitude de chambres et réservoirs à vide qui sont raccordées à des différents étages de pression, dont chaque étage comporte un autre niveau de pression.

Ces installations centrales de vide ont typiquement des grandes capacités et ont notamment l'avantage de pouvoir « alimenter » plusieurs machines à la fois. Cependant, leur réseau de conduits, réservoirs et chambres est onéreux, très encombrant pour maintenir la capacité de pompage souhaitée et également très difficile à nettoyer.

On connaît également des groupes de pompage constitués d'une ou plusieurs pompes primaires et de boosters. Typiquement, les pompes primaires sont situées hors de la machine d'emballage sous vide, normalement pour des raisons d'encombrement, pour ensuite être reliées par un conduit à celle-ci. Les vannes d'isolations et d'autres éléments auxiliaires sont également prévus dans une telle installation afin de permettre la réalisation du vide recherché. En règle générale, la commande de toutes les différentes pompes dans un groupe de pompage de ce type est réalisée à l'aide d'un automate.

Les groupes de pompage de ce type présentent également les problèmes liés à l'encombrement et au nettoyage, mais il est en plus également nécessaire de garantir la commande des différents éléments du système de manière optimale, ce qui peut créer les problèmes au niveau de synchronisation et/ou réglage.

On connaît aussi les solutions dans lesquelles une pompe à vide est incorporée dans l'enceinte de la machine d'emballage sous vide et directement reliée à la partie de la machine qui doit être mise sous vide. Bien qu'avantageux au niveau de raccordement de la pompe, cet arrangement présente clairement le désavantage d'être uniquement limité à des pompes avec certains gabarits prédéterminés. En d'autres mots, le choix de pompes est forcément limité et il est ainsi parfois difficile ou même impossible de trouver la pompe ayant les caractéristiques nécessaires qui va bien avec la forme et la structure de la machine d'emballage.

D'un autre côté, les pompes isolées et les pompes primaires dans des groupes de pompage sont, dans la grande majorité des applications, des pompes à vide du type à palettes lubrifiées. Le principe de fonctionnement de ce type de pompes pose le problème des vidanges qui sont intrinsèquement liées à la nature du processus de pompage. Cela implique du personnel, du temps d'immobilisation des installations, mais aussi de la consommation d'huile et son retraitement. Les frais d'exploitation en sont directement affectés.

En outre, il existe également des grands risques de contamination en amont des produits à emballer par l'huile en provenance d'une pompe à vide à palettes. Ceci pose un problème notamment dans les applications dans lesquelles les produits à emballer sont les produits alimentaires ou pharmaceutiques qui doivent respecter certaines normes d'hygiène prédéfinies. Les dommages peuvent être conséquents vu la cadence d'une machine d'emballage sous vide automatisée. Cela impose une surveillance particulière et délicate.

On connaît des applications récentes dans l'industrie alimentaire où les pompes utilisées ne sont pas des pompes à vide du type à palettes lubrifiées, mais des pompes à vide sèches de type à vis. Ces pompes sont originaires des pompes industrielles standard proposées déjà par les constructeurs sur le marché avec cependant de légères adaptations liées aux normes de l'industrie alimentaire.

Ces normes de l'industrie alimentaire demandent notamment le respect des niveaux d'hygiène élevés qui requièrent un nettoyage ainsi qu'une désinfection des pompes régulières. Néanmoins, l'accès aux rotors de pompage de ces pompes est souvent difficile et passe par le démontage total de la pompe, rendant le nettoyage problématique. De même, le montage des différentes pièces de la pompe après le nettoyage s'avère également difficile à cause des problèmes de centrage et réglage précis des rotors, ce qui demande normalement l'intervention du personnel spécialisé.

De même, les industriels souhaitent continuellement réduire l'encombrement des composants dans leurs installations de fabrication, et notamment dans les machines d'emballage sous vide où la place sous le plan de convoyage des produits à emballer est restreinte. En même temps, ils imposent aux dispositifs de pompage d'être toujours plus performants en termes de débit et consommation d'énergie.

Dans le document US 5 904 473 A, il est décrit une pompe à vide selon le préambule de la revendication 1 annexée.

### Exposé sommaire de l'invention

L'objet de la présente invention vise donc à pallier tous les inconvénients précités et à fournir une nouvelle pompe à vide qui est particulièrement adaptée à être utilisée pour applications dans les machines d'emballage sous vide. En particulier, l'objet de la présente invention vise à mettre à disposition une nouvelle pompe à vide qui combine un volume réduit avec des performances améliorées et dont la structure permet un démontage, nettoyage et remontage facile, ne nécessitant pas de personnel hautement spécialisé.

A cet effet, l'invention a notamment pour objet une pompe à vide selon la revendication 1.

En particulier, les objets assignés à l'invention sont atteints à l'aide d'une pompe à vide pour applications dans les machines d'emballage sous vide, comprenant :
- un cylindre, constitué
   * de l'enveloppe de deux chambres cylindriques parallèles, intersectées transversalement, et dont les axes reposent dans un plan, et dont une des faces représente une paroi sur laquelle se trouve l'orifice d'aspiration, et
   * de l'enveloppe extérieure englobant l'enveloppe de deux chambres cylindriques parallèles pour former un espace confiné, muni d'une entrée et d'une sortie, qui permet de faire circuler un fluide effectuant de l'échange thermique,
- deux rotors de pompage, situés dans les chambres cylindriques parallèles et entraînés en rotation par un moteur, et
- un carter d'entrainement contenant le moteur, les composants d'entrainement et de synchronisation des rotors de pompage, supportant lesdits rotors en porte-à-faux et servant d'appui et de centrage au cylindre,
les rotors de pompage possédant des premiers organes de guidage en rotation et deuxièmes organes de guidage en rotation des rotors qui supportent les rotors en porte-à-faux,
les premiers organes de guidage en rotation étant situés aux extrémités de deux supports étirés qui sont solidaires au carter d'entraînement,
les deux supports étirés faisant partie d'une pièce monobloc qui porte les premiers et deuxièmes organes de guidage en rotation, tandis que le cylindre est en appui contre cette pièce monobloc comprenant les deux supports étirés.

Dans un mode de réalisation particulier, la partie arrière du carter représente un boîtier fermé, incluant le stator du moteur électrique. Notamment, ce boîtier peut comprendre l'électronique de commande du moteur électrique, des moyens de visualisation des paramètres de fonctionnement de la pompe et des moyens de refroidissement. L'avantage de cette structure est que les composants liés au moteur peuvent être séparés de la partie active de la pompe, ce qui permet la commande, mais également la manutention et le service plus simple.

Dans un autre mode de réalisation de la présente invention, le moteur est supporté en porte-à-faux et le rotor du moteur est directement relié à l'arbre d'un des rotors de pompage. Ce mode de réalisation a notamment l'avantage que l'encombrement de la pompe peut être réduit. De même, un contact direct entre le rotor du moteur et l'arbre du rotor de pompage garantit un entrainement plus performant.

Cependant, le moteur dans la pompe selon un autre mode de réalisation de la présente invention possède ces propres paliers et le rotor du moteur est relié à l'arbre d'un des rotors de pompage par un accouplement. L'avantage de ce mode de réalisation est le fait qu'un moteur « classique » peut être utilisé. Aussi, le fait que ce moteur est supporté sur ses propres paliers rend son intégration dans la pompe plus simple. Aussi, l'échange du moteur (p.ex. dans le cas d'une panne) peut être réalisé plus facilement qu'avec un moteur qui est relié directement à l'arbre du rotor de pompage.

Dans un autre mode de réalisation de la pompe selon l'invention, elle comprend un support réalisant la liaison au sol, reliant le cylindre de sorte que le flux des gaz pompés et des fluides de rinçage suivent un écoulement naturel jusqu'à l'orifice de refoulement et produisant un effet de silencieux. De façon notable, le support peut faire partie intégrale de l'enveloppe extérieure du cylindre en gardant toutes ses fonctions. Ceci a l'avantage de garantir un usinage plus simple et de réduire le nombre de composants de la pompe.

D'une manière notable, le plan dans lequel reposent les axes des chambres cylindriques de la pompe selon un autre mode de réalisation de la présente invention est horizontal. L'avantage de cet arrangement est une configuration compacte qui permet de réduire considérablement l'encombrement et l'utilisation de l'espace. Aussi, le nettoyage et/ou la maintien de la pompe peuvent être réalisés d'une manière beaucoup plus simple étant donné que les rotors peuvent être accédés plus facilement et étant donné que les eaux usées et/ou les moyens de nettoyage peuvent s'écouler sans entrer en contact avec les autres éléments de la pompe.

Egalement, l'orifice d'aspiration dans un mode particulier de réalisation de la présente invention se trouve dans la face du cylindre opposée au carter d'entrainement ou la face du cylindre parallèle à la face supérieure du support. Ce positionnement de l'orifice d'aspiration est avantageux notamment par le fait que l'encombrement de la pompe peut être réduit d'avantage. Etant donné que l'orifice d'aspiration se trouve sur une des faces les plus exposées, un raccordement facile à la canalisation du gaz de la machine peut être réalisé. Il en ressort également que cette structure permet un raccordement direct (c'est-à-dire uniquement avec les tuyaux permettant un écoulement naturel du gaz à évacuer). Une amélioration de la performance de la pompe en est une conséquence directe.

De manière notable, les rotors de pompage sont de type à vis avec respectivement filet à gauche et filet à droit, tournant engrenés ensemble en sens opposé dans le cylindre. L'avantage de ce type de pompes sèches est l'absence d'huile qui les rend plus simplement utilisables dans les applications qui requièrent une hygiène élevée. Une contamination peut donc être complètement exclue. De même, ces pompes sont compactes et ont un bon rendement général. Finalement, le contrôle de la vitesse de rotation peut simplement affecter le réglage du débit et/ou du niveau de vide.

Finalement, les organes de guidage en rotation peuvent être paliers à billes. Les paliers à billes sont des éléments mécaniques qui ont beaucoup de caractéristiques avantageuses dans ce type d'applications. En outre, ils sont relativement bon marché.

L'invention sera bien comprise à la lecture de la description ci-après faite à titre d'exemple non limitatif en regard des dessins ci-annexés qui représentent schématiquement :
Figure 1 : une vue en perspective de la pompe à vide selon un mode de réalisation de la présente invention ;
Figure 2 : une vue en coupe de la pompe à vide de la figure 1 selon un plan qui passe par les axes longitudinaux des rotors ;
Figure 3 : une vue en perspective de la pompe à vide de la figure 1 avec le cylindre séparé du carter d'entrainement et du fondement.

### Exposé détaillé de l'invention

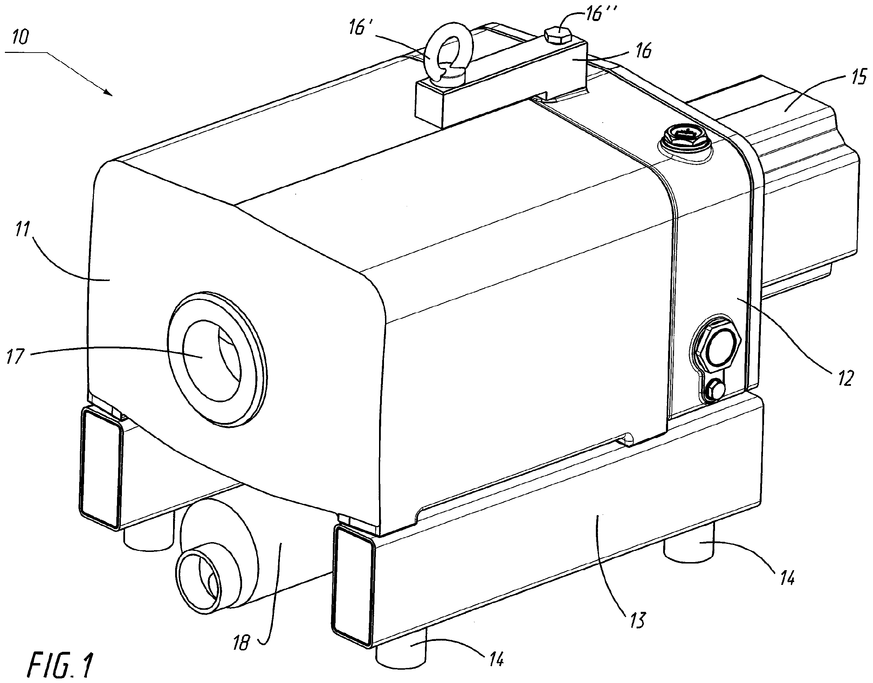

Sur la figure 1, on a schématiquement représenté une pompe à vide 10 conforme à un mode de réalisation préféré de la présente invention. Comme déjà mentionné plus haut, cette pompe à vide 10 est notamment destinée pour applications dans des machines d'emballage sous vide. Néanmoins, il faut noter que le champ d'applications de la pompe à vide 10 n'est pas limité à cette application uniquement. Un homme de métier comprend ainsi facilement que cette pompe à vide 10 peut aussi favorablement être utilisée dans d'autres applications.

Pour répondre aux tendances du marché et pour palier aux inconvénients mentionnés, cette pompe à vide 10 possède une configuration spécifique.

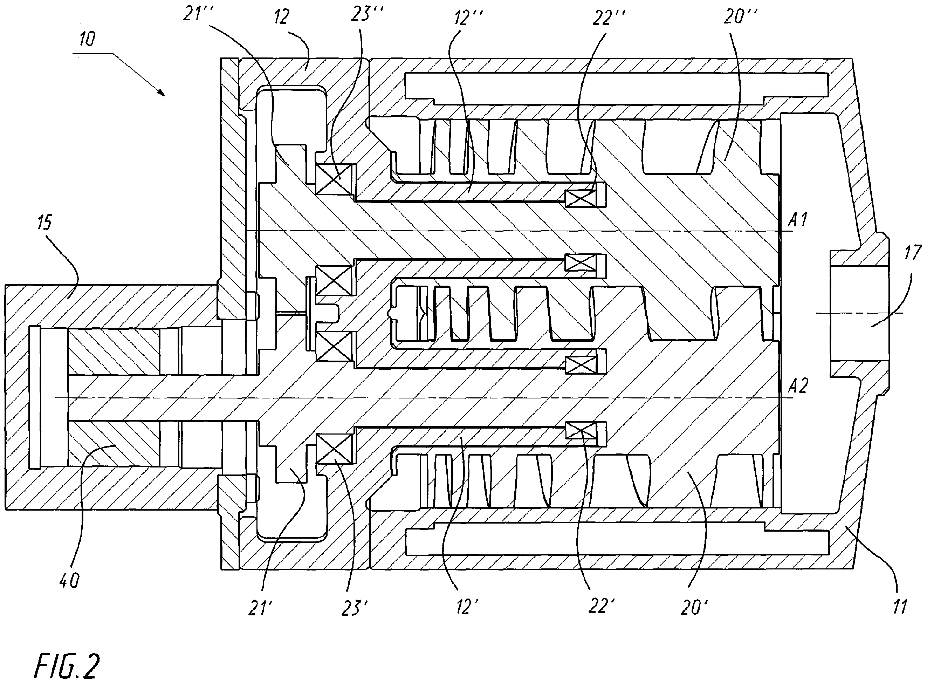

En particulier, le corps de la pompe 10 comprend un cylindre 11 qui englobe la partie « active » de la pompe à vide 10, notamment les deux rotors de pompage qui, par un processus connu dans l'art, permettent de créer le vide. Ces rotors de pompage sont arrangés dans des chambres cylindriques parallèles, intersectées transversalement, et dont les axes reposent dans un plan. Dans la figure 1, le plan dans lequel reposent les axes des rotors de pompage est horizontal. Cependant, il est également possible d'imaginer une pompe qui reprend toutes les autres caractéristiques de la pompe selon la figure 2, mais dont le plan dans lequel reposent les axes des rotors de pompage est incliné d'un certain angle par rapport au plan horizontal ou même une pompe dont les rotors de pompage sont arrangés verticalement ou sous un certain angle par rapport au plan vertical. Les rotors peuvent notamment être du type à vis à pas variable avec respectivement filet à gauche et filet à droit, tournant engrenés ensemble en sens opposé, dans le cylindre 11 (tous les détails de cette structure de rotors seront représentés en détail plus loin). Bien sûr, la présente invention n'est aucunement limitée aux vis à pas variable et il est tout à fait imaginable d'utiliser les vis à pas constant (sur une partie uniquement ou sur toute la longueur de la vis, p.ex. une vis « étagée » avec une première zone ayant un premier pas constant et au moins une deuxième zone ayant un deuxième pas constant, différent du premier pas, ou une vis avec une première zone ayant un pas constant et une deuxième zone ayant un pas variable) en conservant tous les avantages de la présente invention.

Quant au cylindre 11, il comprend d'un côté une enveloppe interne et d'un autre côté une enveloppe externe. L'enveloppe interne du cylindre 11 englobe les deux chambres cylindriques parallèles qui contiennent les rotors. L'enveloppe externe du cylindre 11 de son côté englobe l'enveloppe interne pour former un espace confiné, muni d'une entrée et d'une sortie, qui permettent ainsi de faire circuler un fluide effectuant de l'échange thermique. Le cylindre 11 est muni d'une entrée des gaz à pomper 17 et d'une sortie des gaz 18.

Le cylindre 11 s'appuie contre un carter d'entrainement 12. Ce carter d'entrainement 12 contient, parmi d'autres choses, les divers composants d'entraînement et de synchronisation des rotors qui supportent ces rotors en porte-à-faux et qui servent d'appui et de centrage au cylindre 11, comme il sera montré plus en détail plus tard.

Egalement, sur la partie supérieure du carter 12 est prévu un arrangement de suspension 16. Cet arrangement de suspension 16 comprend une boucle 16' à laquelle peut être attaché un crochet (ou un autre dispositif similaire) pour soulever la pompe 10 à l'aide d'une machine élévatrice, p.ex. afin d'installer la pompe 10 sur le bon endroit pendant la phase d'installation initiale ou pendant les périodes de service et de manutention. L'arrangement de suspension 16 est typiquement fixé sur le carter 12 à l'aide d'une ou plusieurs vis 16" qui permettent de démonter l'arrangement de suspension 16 s'il n'est pas en fonction, mais il est évident qu'il est possible de prévoir une pompe 10 dans laquelle l'arrangement de suspension 16 ne peut pas être démonté ou même une pompe 10 qui ne contient pas d'arrangement de suspension.

Dans la figure 1, la partie arrière du carter 12 s'agrandit dans un boîtier fermé 15 qui inclut le stator du moteur électrique. Ce moteur électrique entraîne en rotation les deux rotors de pompage susmentionnés qui se trouvent dans les chambres enveloppées par le cylindre 11. En outre, le boîtier 15 peut également comprendre l'électronique de commande du moteur électrique, des moyens de visualisation des paramètres de fonctionnement de la pompe 10 et/ou des moyens de refroidissement, mais ces éléments peuvent également être aménagés dans des boîtiers dédiés ou dans d'autres parties de la pompe à vide 10.

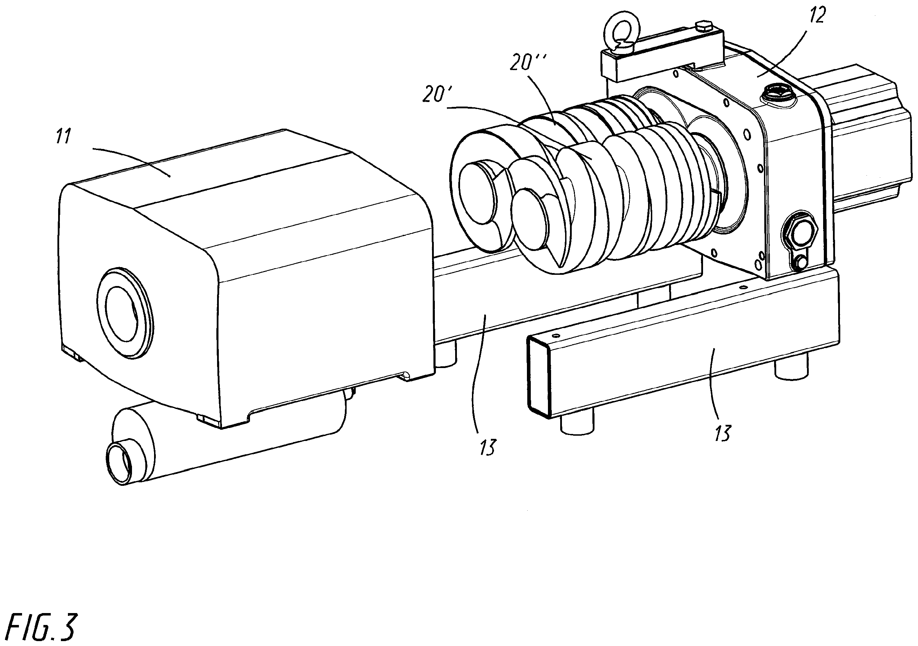

Avantageusement, le rotor de ce moteur électrique est également supporté en porte-à-faux et est directement relié à l'arbre d'un des rotors de pompage qui porte une des vis (comme il sera illustré plus en détail dans les figures 2 et 3). Ainsi, la rotation du rotor 40 du moteur électrique est directement transmise au premier rotor de pompage et, grâce à un mécanisme de transmission approprié (p.ex. un engrenage), au deuxième rotor de pompage de la pompe. Cependant, le moteur utilisé peut également être un moteur « classique », supporté sur ses propres paliers, dont le rotor est relié à l'arbre d'un des rotors de pompage par un accouplement approprié.

Dans ces deux configurations, les moteurs utilisés peuvent être des moteurs synchrones (brushless ou autres) ou bien des moteurs asynchrones ou tout autre type. L'avantage d'utilisation d'un moteur asynchrone réside notamment dans le fait qu'il peut être directement branché sur le réseau. D'un autre côté, les moteurs synchrones ont notamment l'avantage d'être plus compacts. L'usage d'un moteur synchrone permet ainsi de réduire d'avantage l'encombrement de la pompe selon la présente invention. De plus, les moteurs synchrones sont également plus économiques et ils comprennent une commande intégrée qui rend possible un réglage simple de la vitesse de rotation en fonction de l'application souhaitée.

Le numéro de référence 13 dans la figure 1 représente un support ou un fondement qui réalise la liaison au sol du cylindre 11. A cette fin, le support 13 possède des pattes 14 qui peuvent notamment être fabriquées en un matériau souple, différent du matériau du support 13, p.ex. en caoutchouc ou similaire. Ces pattes 14 peuvent être fixes, mais également ajustables de manière à pouvoir compenser les éventuelles inégalités du sol. Le nombre de pattes 14 peut également varier en fonction des besoins concrets.

Dans un autre mode de réalisation de la pompe à vide 10 selon la présente invention, le support 13 peut faire partie intégrale de l'enveloppe externe du cylindre 11 en gardant toutes ses fonctions.

Figure 2 représente une vue en coupe de la pompe à vide 10 de la figure 1 selon un plan qui passe par les axes longitudinaux des rotors. Comme on peut s'apercevoir dans la figure 2, le plan qui comprend les axes des rotors de pompage est un plan horizontal. Néanmoins, comme mentionné plus haut, les axes des rotors de pompage peuvent également se trouver dans un plan vertical, ou un plan incliné par rapport au plan horizontal et/ou par rapport au plan vertical.

Dans la figure 2, on peut voir que la pompe 10 est une pompe sèche du type à vis avec deux rotors de pompage 20', 20". Il n'est cependant pas exclu d'utiliser un autre type de rotors de pompage avec une configuration similaire. Les deux rotors de pompage 20', 20" sont englobés par le cylindre 11 et ils sont entrainés en rotation autour de leurs axes longitudinaux A1, A2 par le moteur électrique 40 qui est logé dans le boîtier d'entrainement 15. Ce moteur électrique est directement relié à un premier rotor de pompage 20' et la force d'entrainement est ensuite transmise au deuxième rotor de pompage 20" par un mécanisme de transmission 21', 21" approprié de façon à permettre une rotation synchronisée, mais en sens opposé, des deux rotors 20', 20".

Les rotors de pompage 20', 20" dans la figure 2 sont du type à vis. Les vis 20', 20" sont respectivement avec le filetage gauche et le filetage droit et elles sont guidées en rotation autour de leurs axes longitudinaux A1, A2 par les premiers organes de guidage en rotation 22', 22" et deuxièmes organes de guidage en rotation 23', 23". Les premiers 22', 22" et deuxièmes 23', 23" organes de guidage en rotation des rotors 20', 20" peuvent notamment être des paliers à billes. Il est cependant possible d'utiliser un autre type d'organes de guidage en rotation pour atteindre les mêmes buts.

Dans la région des deux axes de rotation des rotors A1, A2, ce carter d'entrainement 12 s'allonge pour former un premier support étiré 12' et un deuxième support étiré 12". Ce sont précisément ces deux supports 12', 12" qui portent à leurs extrémités les premiers organes de guidage en rotation 22', 22" qui, avec les deuxièmes organes de guidage en rotation 23', 23" supportent les rotors 20', 20".

La structure des organes de guidage en rotation 22', 22", 23', 23" qui est représentée dans la figure 2 permet notamment d'obtenir des rotors 20', 20" qui sont supportés en porte-à-faux par le carter d'entrainement 12. En d'autres mots, les rotors 20', 20" ne sont pas supportés du côté de l'entrée 17 qui se trouve sur le cylindre 11.

Cette structure particulière permet donc de démonter la pompe 10 et de remettre par la suite tous les éléments en place d'une manière très simple. Figure 3 montre une vue en perspective de la pompe à vide 10 avec le cylindre séparé du carter d'entrainement et du fondement. Dans la figure 3, le cylindre 11 du corps de la pompe 10 a été entièrement séparé du carter d'entraînement 12 et du fondement 13. Une telle séparation du cylindre 11 est notamment nécessaire pour le nettoyage des rotors 20' et 20" de la pompe 10. Grâce au support en porte-à-faux des rotors 20', 20" par les organes de guidage en rotation 22', 22", 23', 23", le cylindre 11 peut facilement être enlevé du fondement 13, sans que les rotors 20', 20" aient été touchés. Comme les deux supports 12', 12" ne sont solidaires que du carter d'entrainement 12, l'absence du cylindre 11 n'affecte aucunement les rotors 20', 20" qui peuvent facilement rester fixés, centrés et balancés en leur position initiale. En d'autres mots, un réglage des rotors 20', 20" n'est pas nécessaire pour la remise en fonction de la pompe 10.

Nous aimerions rappeler à cet endroit que l'utilisation des pompes à vides dans les machines d'emballage à vide pour l'industrie alimentaire ne doit pas être contraire aux normes alimentaires. La pompe 10 selon l'invention est une pompe sèche et elle élimine donc complètement la possibilité de contamination des aliments par l'huile. De même, par rapport à la pompe à vide à palettes lubrifiées, la vidange et le traitement des huiles sont également éliminés, ce qui rend l'utilisation d'une telle pompe plus facile.

Egalement, les normes alimentaires requièrent un démontage régulier de la pompe pour le nettoyage, service ou inspection. Grâce à la structure proposée, le démontage ne doit plus être effectué par personnes spécialisées.

La pompe à vide 10 pour applications dans des machines d'emballage sous vide selon la présente invention présente donc plusieurs avantages qui aident à améliorer l'utilisation et le fonctionnement d'une machine d'emballage sous vide dans les aspects suivants :
1. économie d'énergie électrique :
   - par rapport à un temps de cycle défini dû à la nature du processus de pompage (taux de compression interne et variation du pas le long de la vis) ;
   - par l'utilisation d'un moteur synchrone couplé avec son électronique de commande (le rotor moteur monté à porte à faux sur l'arbre) ;
   - par la variation de la vitesse de rotation des rotors en fonction du besoin de la machine d'emballage sous vide ;
2. économie d'espace :
   - par l'utilisation d'une seule pompe en remplacement des moyens de pompage communément utilisés et notamment, soit une pompe à vide à palettes lubrifiées, intégrée dans la machine d'emballage sous vide, soit un groupe de pompage, composé d'une pompe à vide à palettes lubrifiée, située à distance de la machine d'emballage sous vide et une pompe de type Roots, intégrée dans la machine d'emballage sous vide ;
   - par un positionnement avantageux des axes des rotors de pompage ;
   - par une conception particulièrement compacte, comparée aux pompes utilisées actuellement, liée entre autre à la vitesse de rotation des rotors, plus élevée que les vitesses nominales des moteurs asynchrones mais aussi à l'absence de compartiment à paliers ou à engrenages du côté de l'aspiration ;
3. suppression du risque de contamination interne des produits à emballer par l'huile en provenance de la pompe à vide :
   - par l'utilisation d'une pompe à vide sèche de type à vis ;
   - par l'absence de compartiment à lubrifiant (compartiment à paliers ou à engrenages) du côté de l'aspiration ;
4. économie en huile par la suppression des vidanges d'huile pour la pompe à vide à palettes ;
5. économie de temps lors des procédures de nettoyage et d'entretien :
   - par une forme extérieure de la pompe, spécialement étudiée pour répondre aux normes d'hygiène de l'emballage alimentaire ;
   - par une facilité du démontage de la pompe et de l'accès aux rotors sans vidange de l'huile du carter des pignons d'entrainement et sans déréglage des jeux fonctionnels ;
   - par l'accès à toutes les fonctions de maintenance par un seul côté.

Il est évident pour un homme du métier que les informations qui viennent d'être données concernant une pompe à vide pourront facilement être adaptées et/ou supplémentées à l'aide d'autres éléments bien connus dans le métier, sans que ces adaptations et/ou suppléments sortent du cadre de la présente invention.

## Revendications

1. Pompe à vide pour applications dans les machines d'emballage sous vide, comprenant :
- un cylindre (11), constitué
* de l'enveloppe de deux chambres cylindriques parallèles, intersectées transversalement, et dont les axes reposent dans un plan, et dont une des faces représente une paroi sur laquelle se trouve l'orifice d'aspiration (17), et
* de l'enveloppe extérieure englobant l'enveloppe de deux chambres cylindriques parallèles pour former un espace confiné, muni d'une entrée et d'une sortie, qui permet de faire circuler un fluide effectuant de l'échange thermique,
- deux rotors de pompage (20', 20"), situés dans les chambres cylindriques parallèles et entraînés en rotation par un moteur, et
- un carter d'entrainement (12) contenant le moteur, les composants d'entrainement et de synchronisation des rotors de pompage, supportant lesdits rotors en porte-à-faux et servant d'appui et de centrage au cylindre (11),
les rotors de pompage (20', 20") possédant des premiers (22', 22") organes de guidage en rotation et deuxièmes (23', 23") organes de guidage en rotation des rotors (20', 20") qui supportent les rotors (20', 20") en porte-à-faux,
les premiers organes de guidage en rotation (22', 22") étant situés aux extrémités de deux supports étirés (12', 12") qui sont solidaires au carter d'entraînement (12),
**caractérisée en ce que** les deux supports étirés (12', 12") font partie d'une pièce monobloc qui porte les premiers et deuxièmes organes de guidage en rotation (22', 22", 23', 23") et **en ce que** le cylindre (11) est en appui contre cette pièce monobloc comprenant les deux supports étirés (12', 12").

2. Pompe selon la revendication 1, **caractérisée en ce que** la partie arrière du carter (12) représente un boîtier fermé (15), incluant le stator du moteur électrique.

3. Pompe selon la revendication 1, **caractérisée en ce que** le boîtier (15) comprend l'électronique de commande du moteur électrique, des moyens de visualisation des paramètres de fonctionnement de la pompe (10) et des moyens de refroidissement.

4. Pompe selon l'une des revendications 1 à 3, **caractérisée en ce que** le moteur électrique est supporté en porte-à-faux et **en ce que** le rotor du moteur est directement relié à l'arbre d'un des rotors de pompage (20').

5. Pompe selon l'une des revendications 1 à 3, **caractérisée en ce que** le moteur électrique possède ces propres paliers et **en ce que** le rotor du moteur est relié à l'arbre d'un des rotors de pompage (20') par un accouplement.

6. Pompe selon l'une quelconque des revendications précédentes, **caractérisée en ce qu'**elle comprend un support (13) réalisant la liaison au sol, reliant le cylindre (11) de sorte que le flux des gaz pompés et des fluides de rinçage suivent un écoulement naturel jusqu'à l'orifice de refoulement (18) et produisant un effet de silencieux.

7. Pompe selon l'une quelconque des revendications précédentes, **caractérisée en ce que** le support (13) fait partie intégrale de l'enveloppe extérieure du cylindre (11) en gardant toutes ses fonctions.

8. Pompe selon l'une quelconque des revendications précédentes, **caractérisée en ce que** le plan dans lequel reposent les axes des chambres cylindriques est horizontal.

9. Pompe selon l'une quelconque des revendications précédentes, **caractérisée en ce que** l'orifice d'aspiration (17) se trouve dans la face du cylindre (11) opposée au carter d'entrainement (12) ou la face du cylindre (11) parallèle à la face supérieure du support (13).

10. Pompe selon l'une quelconque des revendications précédentes, **caractérisée en ce que** les rotors de pompage (20', 20") sont de type vis avec respectivement filet à gauche et filet à droit, tournant engrenés ensemble en sens opposé dans le cylindre (11).

11. Pompe selon l'une quelconque des revendications précédentes, **caractérisée en ce que** les deuxièmes organes de guidage en rotation (23', 23") sont intégrés dans le carter d'entrainement (12).

12. Pompe selon l'une quelconque des revendications précédentes, **caractérisée en ce que** les organes de guidage en rotation (22', 22", 23', 23") sont des paliers à billes.

## Patentansprüche

1. Vakuumpumpe zur Anwendung bei Vakuumverpackungsmaschinen, umfassend:
- einen Zylinder (11), gebildet durch
* das Gehäuse von zwei sich quer überschneidenden, parallelen zylindrischen Kammern, deren Achsen in einer Ebene liegen und deren eine der Stirnflächen eine Wand darstellt, in welcher die Ansaugöffnung (17) angeordnet ist, und
* das Aussengehäuse das Gehäuse von zwei parallelen zylindrischen Kammern umfasst, um einen begrenzten Raum zu bilden, aufweisend einen Einlass und einen Auslass, wobei eine Flüssigkeit zirkulieren kann, um den Wärmetausch durchzuführen,
- zwei Pumpenrotoren (20', 20"), welche in den parallelen zylindrischen Kammern angeordnet sind und von einem Motor rotierend angetrieben werden, und
- ein Motorgehäuse (12), umfassend den Motor und die Komponenten zum Antrieb und zur Synchronisation der Pumpenrotoren, welche die Rotoren freitragend lagern und zur Lagerung und zur Zentrierung in Bezug auf den Zylinder (11) dienen
die Pumpenrotoren (20', 20") weisen erste (22', 22") Elemente zur Drehführung und zweite (23', 23") Elemente zur Drehführung der Rotoren (20', 20") auf, wobei die Führungselemente die Rotoren (20', 20") freitragend lagern;
die ersten Elemente zur Drehführung (22', 22") an den Enden von zwei sich erstreckenden Tragelementen (12', 12") angeordnet sind, welche mit dem Motorgehäuse (12) integral sind,
**dadurch gekennzeichnet, dass** die zwei sich erstreckenden Tragelemente (12', 12") einen Teil eines Monoblocks bilden, welcher die ersten und zweiten Elemente zur Drehführung (22', 22", 23', 23") stützt und wobei der Zylinder (11) an diesen Teil des Monoblocks anliegt, welcher die beiden sich erstreckenden Tragelemente (12', 12") umfasst.

2. Pumpe nach Anspruch 1, **dadurch gekennzeichnet, dass** die Rückseite des Gehäuses (12) eine geschlossene Box (15) darstellt, welche den Stator des Elektromotors einschliesst.

3. Pumpe nach Anspruch 1, **dadurch gekennzeichnet, dass** die Box (15) die Steuerelektronik für den Elektromotor, Anzeigemittel für die Parameter des Pumpenbetriebs (10) und Kühlmittel umfasst.

4. Pumpe nach einem der Ansprüche 1 bis 3, **dadurch gekennzeichnet, dass** der Elektromotor freitragend gelagert ist und dass der Rotor des Motors direkt mit der Welle einer der Pumpenrotoren (20') verbunden ist.

5. Pumpe nach einem der Ansprüche 1 bis 3, **dadurch gekennzeichnet, dass** der Elektromotor seine eigenen Lager aufweist und dass der Rotor des Motors mit der Welle eines der Pumpenrotoren (20') über eine Kupplungsvorrichtung verbunden ist.

6. Pumpe nach einem der vorhergehenden Ansprüche, **dadurch gekennzeichnet, dass** es ein Tragelement (13) umfasst, über welches die Verbindung zu dem Untergrund oder Boden derart erzielt wird, dass die Strömung des geförderten Gases und der fliessenden Flüssigkeiten zur Auslassöffnung (18) einem natürlichen Verlauf folgt, wobei ein Geräuschdämpfender Effekt erzeugt wird.

7. Pumpe nach einem der vorhergehenden Ansprüche, **dadurch gekennzeichnet, dass** das Tragelement (13) einen integralen Teil des Aussengehäuses des Zylinders (11) bildet, während alle seine Funktionen beibehalten werden.

8. Pumpe nach einem der vorhergehenden Ansprüche, **dadurch gekennzeichnet, dass** die Ebene horizontal ist, in welcher die Achsen der zylindrischen Kammern liegen.

9. Pumpe nach einem der vorhergehenden Ansprüche, **dadurch gekennzeichnet, dass** die Ansaugöffnung (17) angeordnet ist an der Stirnfläche des Zylinders (11), dem Motorgehäuse gegenüber liegend oder an der Stirnfläche des Zylinders (11) parallel zu der oberen Fläche des Tragelements (13).

10. Pumpe nach einem der vorhergehenden Ansprüche, **dadurch gekennzeichnet, dass** die Pumpenrotoren (20', 20") vom Typ Schraube mit einem linksdrehenden Gewinde bzw. einem rechtsdrehenden Gewinde sind, welche in dem Zylinder (11) in gegengesetzter Richtung, in Eingriff miteinander drehen.

11. Pumpe nach einem der vorhergehenden Ansprüche, **dadurch gekennzeichnet, dass** die zweiten Elemente der Drehführung (23', 23") in dem Motorgehäuse (12) eingebaut sind.

12. Pumpe nach einem der vorhergehenden Ansprüche, **dadurch gekennzeichnet, dass** die Elemente der Drehführung (22', 22", 23', 23") Kugellager sind.

## Claims

1. Vacuum pump for applications in vacuum packaging machines, comprising:
- a cylinder (11), made up of
*the casing of two transversely intersected, parallel cylindrical chambers, the axes of which rest in one plane, and one of the faces of which represents a wall on which the suction hole (17) is located, and
*the outer casing containing the casing of two parallel cylindrical chambers to form a confined space, provided with an inlet and an outlet, which allows a liquid to be circulated, carrying out the thermal exchange,
- two pump rotors (20', 20"), situated in the parallel cylindrical chambers and driven in rotation by a motor, and
- a drive housing (12) containing the motor and the components for driving and synchronizing the pump rotors supporting said rotors by cantilever and serving as support and centring with respect to the cylinder (11)
the pump rotors (20', 20") have first (22', 22") elements for guiding in rotation and second (23', 23") elements for guiding in rotation of the rotors (20', 20"), which guide elements support the rotors (20', 20") by cantilever,
the first elements for guiding in rotation (22', 22") being situated at the ends of two extended supports (12', 12") which are integral with the drive housing (12),
**characterised in that** the two extended supports (12', 12") form part of a monobloc part which bears the first and second elements for guiding in rotation (22', 22", 23', 23") and **in that** the cylinder (11) rests against this monobloc part including the two extended supports (12', 12").

2. Pump according to claim 1, **characterised in that** the rear part of the housing (12) represents a closed box (15), including the stator of the electric motor.

3. Pump according to claim 1, **characterised in that** the box (15) comprises the control electronics for the electric motor, display means for the parameters of operation of the pump (10) and cooling means.

4. Pump according to one of the claims 1 to 3, **characterised in that** the electric motor is supported by cantilever and **in that** the rotor of the motor is directly connected to the shaft of one of the pump rotors (20').

5. Pump according to one of the claims 1 to 3, **characterised in that** the electric motor has its own bearings and **in that** the rotor of the motor is connected to the shaft of one of the pump rotors (20') by a coupling device.

6. Pump according to any one of the preceding claims, **characterised in that** it comprises a support (13) achieving the connection to the ground or floor, connecting the cylinder (11) in such a way that the flow of pumped gases and of rinsing liquids follows a natural course to the discharge orifice (18), producing a sound absorbing effect.

7. Pump according to any one of the preceding claims, **characterised in that** the support (13) forms an integral part of the outer casing of the cylinder (11) while keeping all its functions.

8. Pump according to any one of the preceding claims, **characterised in that** the plane in which the axes of the cylindrical chambers lie is horizontal.

9. Pump according to any one of the preceding claims, **characterised in that** the suction hole (17) is located in the face of the cylinder (11) opposite the drive housing (12) or the face of the cylinder (11) parallel to the upper face of the support (13).

10. Pump according to any one of the preceding claims, **characterised in that** the pump rotors (20', 20") are of screw type with left-handed thread and right-handed thread respectively, turning meshed together in opposite direction in the cylinder (11).

11. Pump according to any one of the preceding claims, **characterised in that** the second elements for guiding in rotation (23', 23") are incorporated in the drive housing (12).

12. Pump according to any one of the preceding claims, **characterised in that** the elements for guiding in rotation (22', 22", 23', 23") are ball bearings.
